# EUROPÄISCHE PATENTANMELDUNG

(11) **EP 1 344 792 A1**
(43) Veröffentlichungstag der Anmeldung: **17.09.2003**
(21) Anmeldenummer: 03004298.0
(22) Anmeldetag: 27.02.2003
(51) Int. Cl.: C08K 3/40, C08K 7/00, C08L 83/04

(54) **Vernetzbare Massen auf der Basis von Organosiliciumverbindungen**

(30) Priorität: 14.03.2002 DE 10211314
(71) Anmelder: Wacker-Chemie GmbH, 81737 München (DE)
(72) Erfinder: Müller, Johann, 94357 Konzell (DE); Madl, Gerhard, 84489 Burghausen (DE)
(74) Vertreter: Budczinski, Angelika

(57) **Zusammenfassung**

Die Erfindung betrifft vernetzbare Massen auf der Basis von Organosiliciumverbindungen, die Glasblättchen enthalten, und daraus hergestellte Formkörper, wobei die Glasblättchen eine Dicke von 0,1 bis 20 um, eine Länge von 1 bis 5000 µm und eine Breite von 1 bis 5000 um sowie ein Verhältnis von Breite bzw. Länge zu Dicke im Bereich von 10 : 1 bis 2000 : 1 aufweisen.

## Beschreibung

Die Erfindung betrifft vernetzbare Massen auf der Basis von Organosiliciumverbindungen, die Glasblättchen enthalten, und daraus hergestellte Formkörper.

Vernetzbare Massen auf der Basis von Organosiliciumverbindungen mit unterschiedlichen Arten von Füllstoffen und Zusätzen sind vielfach bekannt. Hierzu sei beispielsweise auf EP-B-841 377 verwiesen, in der insbesondere Organopolysiloxanmassen beschrieben werden, die nach der Vernetzung Vulkanisate mit grifftrockener Oberfläche ergeben. Des weiteren werden in US-A-5,767,185 formbare Siliconkautschukmassen offenbart, die als Füllstoff Glasteilchen enthalten.

Gegenstand der Erfindung sind vernetzbare Massen auf der Basis von Organosiliciumverbindungen, dadurch gekennzeichnet, dass sie Glasblättchen mit einer Dicke von 0,1 bis 20 µm, einer Länge von 1 bis 5000 µm und einer Breite von 1 bis 5000 µm enthalten.

Die in den erfindungsgemäßen Massen enthaltenen Glasblättchen können aus beliebigen Glasarten bestehen, wobei es sich bevorzugt um anorganisches Glas handelt.

Beispiele für Glasarten, aus denen die erfindungsgemäß eingesetzten Glasblättchen bestehen können, sind technisches Glas, Quarzglas, Borsilikatglas, Flachglas, Pressglas, Hohlglas, Tafelglas, Spiegelglas, keramische Gläser, wobei technisches Glas, Flachglas, Borosilikatglas und keramische Gläser besonders bevorzugt sind, insbesondere Flachglas, technisches Glas und Borosilikatglas.

Die erfindungsgemäß eingesetzten Glasblättchen können unbehandelt oder mit funktionellen Silanen oberflächenbehandelt sein. Beispiele für funktionelle Silane, mit denen die Glasblättchen oberflächenbehandelt sein können, sind Aminopropyltrialkoxysilane, Aminoethylaminopropyltrialkoxysilane, Vinyltrialkoxysilane, Vinyltriacetoxysilane, Glycidoxypropyltrialkoxysilane oder Methacryloxypropyltrialkoxysilane.

Weiterhin können die erfindungsgemäß eingesetzten Glasblättchen metallbedampft sein oder eine Oberflächenbeschichtung rein organischer oder rein anorganischer Natur erhalten haben.

Die erfindungsgemäß eingesetzten Glasblättchen haben eine Dicke von bevorzugt 0,1 bis 10 µm, besonders bevorzugt 0,5 bis 10 µm, insbesondere 1 bis 7 µm,
eine Länge von bevorzugt 1 bis 3000 µm, besonders bevorzugt 1 bis 1500 µm, insbesondere 1 bis 500 µm,
eine Breite von bevorzugt 1 bis 3000 µm, besonders bevorzugt 1 bis 1500 µm, insbesondere 1 bis 500 µm, wobei das Verhältnis von Breite bzw. Länge zu Dicke im Bereich von bevorzugt 10 : 1 bis 2000 : 1, besonders bevorzugt 20 : 1 bis 1500 : 1, insbesondere 30 : 1 bis 1000 : 1, liegt.

Bevorzugt sind bei den erfindungsgemäß eingesetzten Glasplättchen jeweils Breite und Länge numerisch größer als die Dicke.

Bevorzugt ist bei den erfindungsgemäß eingesetzten Glasplättchen das Verhältnis von Breite zu Länge bzw. Länge zu Breite kleiner 100.

Die erfindungsgemäß eingesetzten Glasblättchen können eine sehr unterschiedliche Geometrie haben, wie etwa planar plattenförmig, wellig, gerollt oder gedreht, vorzugsweise sind sie jedoch planar.

Die erfindungsgemäß eingesetzten Glasblättchen sind handelsübliche Produkte und können beispielsweise bei der Firma Glass Flake Ltd., GB-Leeds bezogen werden.

Herstellungsbedingt können die erfindungsgemäß eingesetzten Glasblättchen mit anderen Glaspartikeln, wie Pulver oder Fasern vermischt sein. Vorzugsweise liegen jedoch mindestens 80 % aller Teilchen in Blattform und nicht in Pulver- oder Faserform vor.

Die erfindungsgemäßen Massen enthalten Glasblättchen in Mengen von bevorzugt 1 bis 80 Gewichtsteilen, besonders bevorzugt 1 bis 70 Gewichtsteilen, insbesondere 2 bis 60 Gewichtsteilen, jeweils bezogen auf 100 Gewichtsteile vernetzbare Masse.

Bei den erfindungsgemäßen Massen kann es sich um beliebige, bisher bekannte Typen von zu Elastomeren vernetzbaren Massen auf der Basis von Organosiliciumverbindungen handeln, wie beispielsweise einkomponentige oder zweikomponentige bei Raumtemperatur (sog. RTV-Massen) oder erhöhter Temperatur (sog. HTV-Massen) vulkanisierbare Organopolysiloxanmassen, wobei die Vernetzung durch Kondensation, Anlagerung von Si-gebundenem Wasserstoff an aliphatische Mehrfachbindung oder peroxidisch durch Bildung von Radikalen erfolgen kann. Die vernetzbaren Massen können dabei frei von Füllstoffen sein, können aber auch aktive oder nicht aktive Füllstoffe enthalten.

Art und Menge der üblicherweise in solchen Massen verwendeten Komponenten sind bereits bekannt. Hierzu sei beispielsweise auf US-A 5,268,441, DE-A 44 01 606, DE-A 44 05 245 und DE-A 43 36 345 verwiesen.

Die erfindungsgemäß eingesetzten Glasblättchen können dabei beliebig mit den anderen Komponenten der erfindungsgemäßen vernetzbaren Massen vermischt werden. So können sie als letzter Schritt in die ansonsten fertige Siliconkautschukformulierung eingemischt oder während der Herstellung der Siliconkautschukmischung eingearbeitet werden. Die Glasblättchen können aber auch in eines bzw. mehrere der eingesetzten Komponenten vorgemischt werden.

Der Mischprozess zur Herstellung der erfindungsgemäßen Massen ist bevorzugt ein einfaches mechanisches Vermengen. Je nach Konsistenz und Viskosität des Basismediums kann der Mischprozess an Walzwerken, Kneter, Dissolver, Z-Mischer, Kugelmühlen oder einfachen Rührwerken erfolgen. Der Mischprozess wird vorzugsweise schon der Einfachheit halber bei Umgebungsdruck durchgeführt. Jedoch ist auch ein Mischen bei reduziertem oder erhöhtem Druck möglich. Ebenso der Einfachheit halber wird der Mischprozess bevorzugt bei Umgebungstemperatur durchgeführt. Es ist jedoch auch möglich, bei erhöhter Temperatur oder unter Kühlen zu mischen.

Die erfindungsgemäßen Massen haben den Vorteil, dass sie einfach in der Herstellung und gut verarbeitbar sind.
Des weitern haben die erfindungsgemäßen Massen den Vorteil, dass daraus Vulkanisate hergestellt werden können, die eine grifftrockene Oberfläche mit geringem Reibungskoeffizienten aufweisen.

Die erfindungsgemäßen Massen können unter den gleichen Bedingungen vernetzen gelassen werden wie bisher bekannte vernetzbare Massen auf der Basis von Organosiliciumverbindungen. Dabei können als Herstellverfahren alle gängigen Prozesse zur Verarbeitung von Siliconkautschuken angewandt werden. Beispiele hierfür sind Kalandrieren, Formpressen, Formspritzen, Extrudieren und Gießen.

Ein weiterer Gegenstand der vorliegenden Erfindung sind Formkörper, hergestellt durch Vernetzung der erfindungsgemäßen Massen.

Die erfindungsgemäßen Massen können auch zum Beschichten von textilen Flächengebilden, wie Gewebe, Gewirke, Gelege, Gestricke, Vliese, Filze etc., verwendet werden. Die Beschichtung kann im Rakelverfahren, Tauchverfahren, Extrusionsverfahren, Spritz- oder Sprühverfahren, aufgebracht werden. Auch alle Arten von Rollenbeschichtungen, wie Gravurwalzen, Pflatschen oder Auftrag über Mehrwalzensysteme sowie Siebdruck sind möglich.

Die beschichteten Gewebe können überall da eingesetzt werden, wo reduzierte Oberflächenreibung, hohe Transparenz, reduzierter Wärmewert und hohe Weiterreißfestigkeit und Reißfestigkeit vorteilhaft sind. Beispiele sind, Gleitschirme, Fallschirme, Heißluftballons, Freizeitkleidung, Freizeitartikel wie Zelte oder Rucksäcke, Segel oder Airbags. Im technischen Bereich werden die beschichteten Gewebe vorteilhaft für Förderbänder, Kompensatoren, Markisen, textiles Bauen oder im Isolationsbereich eingesetzt.

Ein weiterer Gegenstand der vorliegenden Erfindung sind mit den erfindungsgemäßen Massen beschichtete textile oder nichttextile Flächengebilde.

Durch Vernetzung der erfindungsgemäßen Massen werden Vulkanisate erhalten, die vorteilhafterweise eine Oberfläche haben, die ohne Nachbehandlung einen reduzierten Reibungskoeffizienten aufweist.

Die erfindungsgemäßen Vulkanisate haben den Vorteil, dass sie eine verbesserte Weiterreißfestigkeit und Reißfestigkeit zeigen und zugleich transparent oder transluzent sind.

Die erfindungsgemäßen Vulkanisate haben weiterhin den Vorteil das sie einen reduzierten Heizwert aufweisen.

Bei den erfindungsgemäßen Massen auf der Basis von Organosiliciumverbindungen kann es sich um unter Ausschluss von Wasser lagerfähige, bei Zutritt von Wasser bei Raumtemperatur durch Kondensation zu Elastomeren vernetzbare Massen handeln.

Bei den erfindungsgemäßen durch Kondensation vernetzbaren Massen handelt es sich vorzugsweise um solche, die
(a) kondensationsfähige Gruppen aufweisende Organosiliciumverbindung,
(b) Organosiliciumverbindung mit mindestens drei Si-gebundenen hydrolysierbaren Resten,
(c) Kondensationskatalysator,
(d) Glasblättchen mit einer Dicke von 0,1 bis 20 µm, einer Länge von 1 bis 5000 µm und einer Breite von 1 bis 5000 µm und gegebenenfalls
(e) weitere Stoffe
   enthalten.

Bei den erfindungsgemäßen durch Kondensation vernetzbaren Massen kann es sich um Einkomponenten-Massen wie auch um Zweikomponenten-Massen handeln, wobei in letzterer eine Komponente nicht gleichzeitig die Bestandteile (a), (b) und (c) enthält.

Als kondensationsfähige Gruppen aufweisende Organosiliciumverbindung (a) wird vorzugsweise solche der allgemeinen Formel

HO(SiR₂O)ₘSiR₂OH (I)

eingesetzt, wobei R gleiche oder verschiedene, gegebenenfalls substituierte einwertige Kohlenwasserstoffreste bedeuten und m eine ganze Zahl im Wert von mindestens 20, bevorzugt eine Zahl von 50 bis 100000 ist.

Obwohl durch Formel (I) nicht dargestellt, können zusätzlich zu den Diorganosiloxaneinheiten (SiR₂O) noch andere Siloxaneinheiten, wie solche der Formeln RSiO_{3/2}, R₃SiO_{1/2} und SiO_{4/2} vorliegen, wobei R jeweils die oben dafür angegebene Bedeutung hat. Die Menge an solchen anderen Siloxaneinheiten als Diorganosiloxaneinheiten beträgt jedoch vorzugsweise höchstens 10 Molprozent; insbesondere höchstens 1 Molprozent, jeweils bezogen auf das Gewicht der Organopolysiloxane (a).

Die Organosiliciumverbindungen (a) besitzen vorzugsweise eine Viskosität von 100 bis 500 000 mm²/s bei 25°C.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der der α- und der β-Phenylethylrest.

Bevorzugt handelt es sich bei Rest R um Reste mit 1 bis 18 Kohlenstoffatomen, besonders bevorzugt um Propyl-, Hexyl- und Octylreste, insbesondere um den Methylrest.

Als Organosiliciumverbindungen mit mindestens drei Si-gebundenen hydrolysierbaren Gruppen (b) werden vorzugsweise Silane der allgemeinen Formel

R¹₄₋ₙSiZₙ (II)

und/oder deren 2 bis 10 Siliciumatome je Molekül aufweisende Teilhydrolysate verwendet,
wobei
R¹ gleich oder verschieden sein kann und eine für R angegebene Bedeutung hat,
n 3 oder 4 ist und
Z gleiche oder verschiedene hydrolysierbare Gruppen bedeutet, wie Amino-, Amido-, Aminoxy-, Oximogruppe, wie z.B. -ON=C(CH₃) (C₂H₅), Alkoxy-, wie z.B. Methoxy- und Ethoxy-, Alkoxyalkoxy-, wie z.B. CH₃-O-C₂H₅-O-, Alkenyloxy-, wie z.B. H₂C=(CH₃)CO-, oder Acyloxy-, wie die Acetoxygruppe.

Bevorzugt handelt es sich bei der hydrolysierbaren Gruppe Z um Ethoxy-, Oximo- und Actoxygruppen.

Bevorzugt handelt es sich bei Rest R¹ um Propyl-, Hexyl-, Octyl-, Vinyl- und Methylreste, wobei Vinyl- und Methylreste besonders bevorzugt sind.

Die Organosiliciumverbindung (b) wird vorzugsweise in einer Menge von 2 bis 10 Gewichtsteilen je 100 Gewichtsteile Organosiliciumverbindung (a) eingesetzt.

Vorzugsweise handelt es sich bei dem Kondensationskatalysator (c) um (Organo-)Metallverbindungen, wie beispielsweise die Salze von Carbonsäuren, die Alkoholate und die Halogenide der Metalle Pb, Zn, Zr, Ti, Sb, Fe, Cd, Sn, Ba, Ca und Mn, wie Zinn(II) octoat, Dibutylzinndilaurat, Octylzinntriacetat, Dioctylzinndioctoat, Dioctylzinndiacetat, Didecylzinndiacetat, Dibutylzinndiacetat, Dibutylzinndibromid, Dioctylzinndilaurat, Trioctylzinnacetat, Titanalkoholat und Organotitanverbindungen mit mindestens einer Si-O-Ti-Bindung.

Kondensationskatalysator (c) wird vorzugsweise in einer Menge von 0,1 bis 2 Gewichtsteilen je 100 Gewichtsteile Organosiliciumverbindung (a) eingesetzt.

Erfindungsgemäß eingesetzte Glasblättchen (d) werden vorzugsweise in einer Menge von 2 bis 80 Gewichtsteilen je 100 Gewichtsteile durch Kondensationsreaktion vernetzbare Masse verwendet.

Der jeweiligen Anwendung entsprechend können den erfindungsgemäßen zu Elastomeren vulkanisierbaren Massen weitere Stoffe (e) zugesetzt werden, mit der Maßgabe, dass die Zusätze (e) unterschiedlich sind zu Komponente (d).

Beispiele für solche weiteren Stoffe (e) sind Füllstoffe, wie z.B. nicht aktive Füllstoffe, Stoffe zur Verbesserung der Oberflächeneigenschaften, wie Haftvermittler, Verärbeitungshilfsmittel, wie etwa Weichmacher, Pigmente, lösliche Farbstoffe, Duftstoffe, Fungicide, rein organische Harze, Korrosionsinhibitoren, Oxidationsinhibitoren, Hitzestabilisatoren, Lösungsmittel, Mittel zur Beeinflussung der elektrischen Eigenschaften, wie leitfähiger Ruß, flammabweisend machende Mittel, Lichtschutzmittel und Mittel zur Verlängerung der Hautbildungszeit, wobei es sich bei Komponente (e) bevorzugt um Füllstoffe, Weichmacher und Haftvermittler handelt.

Beispiele für verstärkende Füllstoffe, die als weitere Stoffe (e) eingesetzt werden können, sind pyrogene oder gefällte Kieselsäuren mit BET-Oberflächen von mindestens 50 m²/g sowie Furnace-Ruß und Acetylen-Ruß, wobei die genannten Kieselsäurefüllstoffe hydrophilen Charakter haben oder nach bekannten Verfahren hydrophobiert sein können.

Beispiele für nichtverstärkende Füllstoffe, die als weitere Stoffe (e) eingesetzt werden können und unterschiedlich sind zu Komponente (d), sind Quarzmehl, Diatomeenerde, Calciumsilikat, Zirkoniumsilicat, Zeolithe, Metalloxidpulver, wie Aluminium-, Titan-, Eisen- oder Zinkoxid, Bariumsilikat, Bariumsulfat, Calciumcarbonat, Gips sowie Kunststoffpulver, wie Polyacrylnitrilpulver oder Polytetrafluorethylenpulver. Des weiteren können als Füllstoffe faserige Komponenten, wie Glasfasern und Kunststoffasern, eingesetzt werden. Die BET-Oberfläche dieser Füllstoffe liegt vorzugsweise unter 50 m²/g.

Beispiele für Weichmacher, die als Komponente (e) eingesetzt werden können, sind mit Trimethylsilylgruppen oder Hydroxygruppen terminierte Polydimethylsiloxane mit einer Viskosität von maximal 1000 mm²/s bei 25°C oder auch Diphenylsilandiol.

Beispiele für Haftvermittler sind Aminosilane, wie Aminoethylaminopropyltriethoxysilan, oder Polysiloxane, die Aminoethylaminopropylsiloxygruppen enthalten.

Beispiele für Hitzestabilisatoren sind Übergangsmetallfettsäuresalze, wie Eisenoctoat, Übergangsmetallsilanolate, wie Eisensilanolat, sowie Cer (IV)-Verbindungen.

Über die Komponenten (a) bis (e) hinausgehend enthalten die erfindungsgemäßen durch Kondensation vernetzbaren Massen vorzugsweise keine weiteren Stoffe.

Bei den einzelnen in den erfindungsgemäßen durch Kondensation vernetzbaren Massen eingesetzten Komponenten kann es sich jeweils um eine Art dieser Komponenten wie auch um ein Gemisch aus mindestens zwei Arten dieser Komponenten handeln.

Die Herstellung der erfindungsgemäßen durch Kondensation vernetzbaren Massen auf der Basis von Organosiliciumverbindungen kann nach bekannten Verfahren erfolgen, wie beispielsweise durch einfaches Mischen der einzelnen Komponenten. Das Vermischen erfolgt vorzugsweise bei Raumtemperatur und vorzugsweise wird bei diesem Vermischen der Zutritt von Wasser vermieden. Falls gewünscht, kann dieses Vermischen aber auch bei höheren Temperaturen erfolgen, z.B. bei einer Temperatur im Bereich von 25 bis 80°C.

Für die Vernetzung der erfindungsgemäßen Massen reicht der übliche Wassergehalt der Luft aus. Die Vernetzung kann, falls erwünscht, auch bei höheren Temperaturen als Raumtemperatur, z.B. bei 25 bis 120°C, oder bei niedrigeren Temperaturen als Raumtemperatur, z.B. bei -10 bis 25°C, durchgeführt werden. Ebenso kann die Vernetzung auch bei Konzentrationen von Wasser durchgeführt werden, die den normalen Wassergehalt der Luft übersteigen.

Die erfindungsgemäßen Massen eignen sich insbesondere als Abdichtungsmassen für Fugen und ähnliche Leerräume mit lichten Weiten von z.B. 10 bis 40 mm oder als Klebstoffe und Verkittungsmassen, z.B. im Fensterbau, oder zur Herstellung von Schutzüberzügen oder zur Herstellung von klebrige Stoffe abweisenden Überzügen oder auch für andere Anwendungen, bei denen die bisher bekannten, bei Raumtemperatur zu Elastomeren vernetzenden Massen eingesetzt werden konnten, wie zur Isolierung von elektrischen oder elektronischen Vorrichtungen, sowie zum Beschichten von Formteilen aus Kunststoffen, Metallen und Elastomeren und zum Beschichten von textilen Flächengebilden.

Bei den erfindungsgemäßen Massen auf der Basis von Organosiliciumverbindungen kann es sich um solche handeln, die vernetzbar sind durch Anlagerung von Si-gebundenem Wasserstoff an aliphatische Kohlenstoff-Kohlenstoff-Mehrfachbindung.

Vorzugsweise enthalten die erfindungsgemäßen additionsvernetzbaren Massen auf der Basis von Organosiliciumverbindungen
(1) Organosiliciumverbindungen, die SiC-gebundene Reste mit aliphatischen Kohlenstoff-Kohlenstoff-Mehrfachbindungen aufweisen,
(2) Organosiliciumverbindungen mit Si-gebundenen Wasserstoffatomen oder anstelle von (1) und (2)
(3) Organosiliciumverbindungen, die SiC-gebundene Reste mit α-liphatischen Kohlenstoff-Kohlenstoff-Mehrfachbindungen und Si-gebundene Wasserstoffatome aufweisen,
(4) die Anlagerung von Si-gebundenem Wasserstoff an aliphatische Mehrfachbindung fördernden Katalysator,
(5) Glasblättchen mit einer Dicke von 0,1 bis 20 µm, einer Länge von 1 bis 5000 µm und einer Breite von 1 bis 5000 µm und gegebenenfalls
(6) weitere Stoffe.

Handelt es sich bei der erfindungsgemäßen Masse um eine additionsvernetzende 2-Komponenten-Siliconkautschukmasse, so können die beiden Komponenten der erfindungsgemäßen Siliconkautschukmassen alle Bestandteile in beliebigen Kombinationen und Mengenverhältnissen enthalten, mit der Maßgabe, dass eine Komponente nicht gleichzeitig die Bestandteile (1), (2) und (3) enthält.

Bei den Organosiliciumverbindungen (1) handelt'es sich vorzugsweise um lineare, cyclische oder verzweigte Siloxane aus Einheiten der Formel

R²ₛR³ₜSiO_{(4-s-t) /2} (III)

wobei
R² gleich oder verschieden sein kann und SiC-gebundener, aliphatisch ungesättigter Kohlenwasserstoffrest bedeutet,
R³ gleich oder verschieden sein kann und gegebenenfalls substituierter, SiC-gebundener aliphatisch gesättigter Kohlenwasserstoffrest bedeutet,
s 0, 1, 2 oder 3, bevorzugt 0, 1 oder 2, ist und
t 0, 1, 2 oder 3 ist, mit der Maßgabe, dass die Summe s+t kleiner oder gleich 3 beträgt und mindestens zwei Reste R² pro Molekül vorhanden sind.

Die Organosiliciumverbindungen (1) besitzen vorzugsweise eine durchschnittliche Viskosität von 10² bis 10⁶ mm²/s bei 25°C.

Vorzugsweise handelt es sich bei Rest R² um aliphatische Mehrfachbindung aufweisende Kohlenwasserstoffreste mit 2 bis 18 Kohlenstoffatomen, wie Vinyl-, Allyl-, Methallyl-, 2-Propenyl-, 3-Butenyl-, 4-Pentenylrest, 5-Hexenyl-, Butadienyl-, Hexadienyl-,Cyclopentenyl-,Cyclopentadienyl-,Cyclohexenyl-,Ethinyl-, Propargyl- und 2-Propinylrest, wobei solche Reste R² mit 2 bis 6 Kohlenstoffatomen besonders bevorzugt sind, insbesondere der Vinyl- und Allylrest.

Beispiele für Reste R³ sind alle für Rest R angegebenen Beispiele für aliphatisch gesättigte Reste.

Bei Rest R³ handelt es sich vorzugsweise um gegebenenfalls substituierte aliphatisch gesättigte, monovalente Kohlenwasserstoffreste mit 1 bis 18 Kohlenstoffatomen, besonders bevorzugt um solche mit 1 bis 8 Kohlenstoffatomen, insbesondere um den Methylrest.

Besonders bevorzugt handelt es sich bei den Organosiliciumverbindungen (1) um lineare Organopolysiloxane mit einer Viskosität von 200 bis 10⁵ mm²/s bei 25°C der Struktur

(ViMe₂SiO_{1/2}) (ViMeSiO) ₀₋₅₀ (Me₂SiO) ₃₀₋₂₀₀₀(ViMe₂SiO_{1/2}),

wobei Me gleich Methyl- und Vi gleich Vinylrest bedeutet.

Als Organosiliciumverbindungen (2), die Si-gebundene Wasserstoffatome aufweisen, werden vorzugsweise lineare, cyclische oder verzweigte Siloxane aus Einheiten der Formel

R⁴ᵤHᵥSiO_{(4-u-v) /2} (IV)

eingesetzt, wobei
R⁴ gleich oder verschieden sein kann und eine oben für R³ angegebene Bedeutung hat,
u 0, 1, 2 oder 3 ist und
v 0, 1 oder 2, bevorzugt 0 oder 1, ist,
mit der Maßgabe, dass die Summe von u+v kleiner oder gleich 3 ist und durchschnittlich mindestens zwei Si-gebundene Wasserstoffatome je Molekül vorliegen.

Die Organosiliciumverbindungen (2) besitzen vorzugsweise eine Viskosität von 10 bis 2·10⁴ mm²/s bei 25°C.

Bevorzugt ist die Verwendung einer drei oder mehr SiH-Bindungen pro Molekül enthaltenden Organosiliciumverbindung (2). Bei Verwendung eines nur zwei SiH-Bindungen pro Molekül aufweisenden Bestandteils (2) enthält die Organosiliciumverbindung (1) vorzugsweise mindestens drei aliphatische Kohlenstoff-Kohlenstoff-Mehrfachbindungen pro Molekül. Es wird also vorzugsweise die Organosiliciumverbindung (2) als Vernetzer eingesetzt.

Die Organosiliciumverbindung (2) hat einen Gehalt an Si-gebundenem Wasserstoff von bevorzugt 0,002 bis 1,7 Gew.-% Wasserstoff, besonders bevorzugt zwischen 0,1 und 1,7 Gew.-% Wasserstoff.

Besonders bevorzugt handelt es sich bei den Organosiliciumverbindungen (2) um Organopolysiloxane mit einer Viskosität von 20 bis 1000 mm²/s bei 25°C.

Das Polyorganosiloxan (2) ist vorzugsweise in einer solchen Menge in der härtbaren Siliconkautschukmasse enthalten, dass das Molverhältnis von SiH-Gruppen zu Resten mit aliphatischer Kohlenstoff-Kohlenstoff-Mehrfachbindung der Komponente (1) zwischen 0,5 und 5, vorzugsweise zwischen 1,0 und 3,0, liegt.

Falls Organosiliciumverbindungen (3) eingesetzt werden, handelt es sich vorzugsweise um solche aus Einheiten der Formel

R³_{f}SiO_{(4-f) /2}, R³_{g}R²SiO_{(3-g) /2} und R³ₕHSiO_{(3-h) /2},

wobei R² und R³ die oben dafür angegebenen Bedeutungen haben,
f 0, 1, 2 oder 3 ist,
g 0, 1 oder 2 ist und
h 0, 1 oder 2 ist,
mit der Maßgabe, dass je Molekül mindestens 2 Reste R² und mindestens 2 Si-gebundene Wasserstoffatome vorliegen.

Beispiele für Organosiliciumverbindungen (3) sind solche aus SiO_{4/2}-, R³₃SiO_{1/2}-, R³₂R²SiO_{1/2}- und R³₂HSiO_{1/2}-Einheiten, sogenannte MQ-Harze, wobei diese Harze zusätzlich R³SiO_{3/2}- und R³₂SiO-Einheiten enthalten können, sowie lineare Organopolysiloxane im wesentlichen bestehend aus R³₂R²SiO_{1/2}-, R³₂SiO- und R³HSiO-Einheiten mit R² und R³ gleich den obengenannten Bedeutungen.

Die Organosiliciumverbindungen (3) besitzen vorzugsweise eine Viskosität von 0,01 bis 500 000 Pa·s, besonders bevorzugt 0,1 bis 100 000 Pa·s, jeweils bei 25°C.

Als Bestandteil (4), der die Additionsreaktion (Hydrosilylierung) zwischen den Resten mit aliphatischer Kohlenstoff-Kohlenstoff-Mehrfachbindung und Si-gebundenem Wasserstoff fördert, können in den erfindungsgemäßen Massen alle bisher bekannten Hydrosilylierungskatalysatoren verwendet werden.

Beispiele für Hydrosilylierungskatalysatoren (4) sind Metalle, wie Platin, Rhodium, Palladium, Ruthenium und Iridium, vorzugsweise Platin, die gegebenenfalls auf feinteiligen Trägermaterialien, wie Aktivkohle, Aluminiumoxid oder Siliciumdioxid, fixiert sein können.

Vorzugsweise werden als Katalysator (4) Platin sowie dessen Verbindungen und Komplexe verwendet.

Die Menge des Katalysators (4) richtet sich nach der gewünschten Vernetzungsgeschwindigkeit und der jeweiligen Verwendung sowie ökonomischen Gesichtspunkten. Die erfindungsgemäßen Massen enthalten Katalysatoren (4) in solchen Mengen, dass ein Platingehalt von vorzugsweise 0,05 bis 500 Gewichts-ppm (= Gewichtsteile je Million Gewichtsteile), besonders bevorzugt 0,5 bis 100 Gewichts-ppm, insbesondere 1 bis 50 Gewichts-ppm, jeweils bezogen auf das Gesamtgewicht der vernetzbaren Masse, resultiert.

Erfindungsgemäß eingesetzte Glasblättchen (5) werden vorzugsweise in einer Menge von 2 bis 80 Gewichtsteilen je 100 Gewichtsteile durch Additionsreaktion vernetzbare Masse verwendet.

Außer den Komponenten (1) bis (5) können die erfindungsgemäßen härtbaren Zusammensetzungen noch alle weiteren Stoffe (6) enthalten, die auch bisher zur Herstellung von additionsvernetzbaren Massen eingesetzt wurden, mit der Maßgabe, dass die weiteren Stoffe (6) unterschiedlich sind zu Komponente (5).

Beispiele für weitere Stoffe (6) sind verstärkende Füllstoffe, nicht verstärkende Füllstoffe, harzartige Polyorganosiloxane, die von den Siloxanen (1), (2) und (3) verschieden sind, Dispergierhilfsmittel, Lösungsmittel, Haftvermittler, Pigmente, Farbstoffe, Weichmacher, organische Polymere, Hitzestabilisatoren, Inhibitoren und Stabilisatoren.

Beispiele gebräuchlicher Inhibitoren, die als Komponente (6) eingesetzt werden können, sind acetylenische Alkohole, wie 1-Ethinyl-1-cyclohexanol, 2-Methyl-3-butin-2-ol und 3,5-Dimethyl-1-hexin-3-ol, 3-Methyl-1-dodecin-3-ol, Polymethylvinylcyclosiloxane, wie 1,3,5,7-Tetravinyltetramethyltetracyclosiloxan, Tetravinyldimethyldisiloxan, Trialkylcyanurate, Alkylmaleate, wie Diallylmaleate, Dimethylmaleat und Diethylmaleat, Alkylfumarate, wie Diallylfumarat und Diethylfumarat, organische Hydroperoxide, wie Cumolhydroperoxid, tert.-Butylhydroperoxid und Pinanhydroperoxid, organische Peroxide, organische Sulfoxide, organische Amine, Diamine und Amide, Phosphane und Phosphite, Nitrile, Triazole, Diaziridine und Oxime.

Der Inhibitorgehalt der erfindungsgemäßen Massen beträgt vorzugsweise 0 bis 50 000 ppm, besonders bevorzugt 50 bis 2000 ppm, insbesondere 100 bis 800 ppm.

Beispiele für Füllstoffe sind die im Zusammenhang mit den kondensationsvernetzbaren Massen oben angegebenen Beispiele.

Falls Füllstoffe eingesetzt werden, handelt es sich um Mengen von bevorzugt 2 bis 100 Gewichtsteilen, besonders bevorzugt 5 bis 60 Gewichtsteilen, jeweils bezogen auf 100 Gewichtsteile der Komponente (1).

Die erfindungsgemäßen Massen können, falls erforderlich, in Flüssigkeiten gelöst, dispergiert, suspendiert oder emulgiert werden. Die erfindungsgemäßen Massen können - insbesondere je nach Viskosität der Bestandteile sowie Füllstoffgehalt - niedrigviskos und gießbar sein, eine pastöse Konsistenz aufweisen, pulverförmig sein oder auch geschmeidige, hochviskose Massen darstellen, wie dies bekanntermaßen bei den in Fachkreisen häufig als RTV-1, RTV-2, LSR und HTV bezeichneten Massen der Fall sein kann. Insbesondere können die erfindungsgemäßen Massen, falls sie hochviskos sind, in Form eines Granulates zubereitet werden.

Die Herstellung der erfindungsgemäßen Organopolysiloxanmassen kann nach bekannten Verfahren erfolgen, wie beispielsweise durch gleichmäßige Vermischung der einzelnen Komponenten.

Bei den erfindungsgemäß eingesetzten Komponenten (1) bis (6) kann es sich jeweils um eine einzelne Art einer solchen Komponente, wie auch um ein Gemisch aus mindestens zwei verschiedenen Arten einer solchen Komponente handeln.

Über die Komponenten (1) bis (6) hinausgehend enthalten die erfindungsgemäßen durch Additionsreaktion vernetzbaren Massen vorzugsweise keine weiteren Stoffe.

Die erfindungsgemäßen durch Anlagern von Si-gebundenem Wasserstoff an aliphatische Mehrfachbindung vernetzbaren Massen können unter den gleichen Bedingungen vernetzen gelassen werden, wie die bisher bekannten durch Hydrosilylierungsreaktion vernetzbaren Massen. Vorzugsweise handelt es sich dabei um Temperaturen von 100 bis 220°C, besonders bevorzugt von 130 bis 190°C, und einem Druck von 900 bis 1100 hPa. Es können aber auch höhere oder niedrigere Temperaturen und Drücke angewendet werden.

Die erfindungsgemäßen Massen sowie die erfindungsgemäß daraus hergestellten Vernetzungsprodukte können für alle Zwecke eingesetzt werden, für die auch bisher zu Elastomeren vernetzbare Organopolysiloxanmassen bzw. Elastomere verwendet wurden. Dies umfaßt insbesondere die Siliconbeschichtung bzw. Imprägnierung beliebiger Substrate, die Herstellung von Formteilen, z.B. im Spritzgußverfahren, Vakuumextrusionsverfahren, Extrusionsverfahren. Formgießen und Formpressen, und Abformungen, die Verwendung als Dicht- Einbett- und Vergußmassen usw.

Bei den erfindungsgemäßen Massen auf der Basis von Organosiliciumverbindungen kann es sich um peroxidisch vernetzbare Massen handeln.

Die erfindungsgemäßen peroxidisch vernetzbaren Massen auf der Basis von Organosiliciumverbindungen enthalten vorzugsweise
(A) Organosiliciumverbindungen aus Einheiten der allgemeinen Formel

   R⁵ᵣSiO_{(4-r) /2} (V)

   worin
   R⁵ gleich oder verschieden sein kann und einwertiger, gegebenenfalls substituierter Kohlenwasserstoffrest, Hydroxy- oder Alkoxyrest bedeutet und
   r 0, 1, 2 oder 3 ist und einen durchschnittlichen Zahlenwert von 1,9 bis 2,1 hat,
(B) die Vernetzung über freie Radikale bewirkendes Agens,
(C) Glasblättchen mit einer Dicke von 0,1 bis 20 µm, einer Länge von 1 bis 5000 µm und einer Breite von 1 bis 5000 µm
   und gegebenenfalls
(D) weitere Stoffe.

Beispiele für Reste R⁵ sind die für R oben angegebenen Beispiele. Bevorzugt handelt es sich bei Rest R⁵ um einwertige, gegebenenfalls substituierte Kohlenwasserstoffreste mit 1 bis 18 Kohlenstoffatomen, beonders bevorzugt um einwertige, gegebenenfalls substituierte Kohlenwasserstoffreste mit 1 bis 8 Kohlenstoffatomen, insbesondere um den Methyl-, Vinyl-, Phenyl- und 3,3,3-Trifluorpropylrest.

Vorzugsweise handelt es sich bei den Organosiliciumverbindungen (A) um Organopolysiloxane aus Einheiten der Formel (V), in denen mindestens 70% aller Reste R⁵ die Bedeutung von Si-gebundenen Alkylresten, insbesondere Methylreste, haben, wobei es sich bei den Einheiten der Formel (V) bevorzugt um Diorganosiloxaneinheiten handelt.

Die Endgruppen der Organosiliciumverbindungen (A) können Trialkylsiloxygruppen, insbesondere der Trimethylsiloxyrest oder der Dimethylvinylsiloxyrest, sein; es können aber auch ein oder mehrere dieser Alkylgruppen durch Hydroxygruppen oder Alkoxygruppen, wie Methoxy- oder Ethoxyreste, ersetzt sein.

Bei den Organosiliciumverbindungen (A) kann es sich um Flüssigkeiten oder hochviskose Substanzen handeln. Vorzugsweise weisen die Organosiliciumverbindungen (A) bei 25°C eine Viskosität zwischen 10³ und 10⁸ mm²/s auf.

Bei der Komponente (B) kann es sich um allgemein ein die Vernetzung über Radikale initiierendes oder bewirkendes Agens handeln, welches auch bisher in peroxidisch vernetzbaren Massen eingesetzt wurde, wobei Peroxide, insbesondere organische Peroxide, bevorzugt sind.

Beispiele für solche organischen Peroxide sind Peroxyketal, z.B. 1,1-Bis(tert.-butylperoxy)-3,3,5-trimethylcyclohexan, 2,2-Bis(tert.-butylperoxy)butan, Diacylperoxide, wie z.B. Acetylperoxid, Isobutylperoxid, Dibenzoylperoxid, Dialkylperoxide, wie z.B. Di-tert-butylperoxid, Tert-butylcumylperoxid, Dicumylperoxid, 2,5-Dimethyl-2,5-di(tert.-butylperoxy)hexan, Bis-(2,4-dichlorbenzoyl)-peroxid und Perester, wie z.B. Tert.-butylperoxyisopropylcarbonat.

Die erfindungsgemäßen zu Elastomeren vernetzbaren Organopolysiloxanmassen enthalten Komponente (B) in Mengen von vorzugsweise 0,4 bis 2,0 Gewichtsprozent, besonders bevorzugt 0,7 bis 1,5 Gewichtsprozent, jeweils bezogen auf das Gesamtgewicht der peroxidisch vernetzbaren Masse.

Erfindungsgemäß eingesetzte Glasblättchen (C) werden vorzugsweise in einer Menge von 2 bis 100 Gewichtsteilen je 100 Gewichtsteile peroxidisch vernetzbare Masse verwendet.

Der jeweiligen Anwendung entsprechend können den erfindungsgemäßen zu Elastomeren vulkanisierbaren Massen weitere Stoffe (D) zugesetzt werden, mit der Maßgabe, dass die Zusätze (D) unterschiedlich sind zu Komponente (C).

Beispiele für solche weiteren Stoffe (D) sind Füllstoffe, Weichmacher, Pigmente und Stabilisatoren, wie etwa Hitzstabilisatoren.

Beispiele für verstärkende und nichtverstärkende Füllstoffe sind die oben im Zusammenhang mit kondensationsvernetzbaren Massen für Füllstoffe angegebenen Beispiele.

Falls die erfindungsgemäßen, peroxidisch vernetzbaren Massen Füllstoff als Komponente (D) enthalten, handelt es sich um Mengen von vorzugsweise 1 bis 200 Gewichtsteilen, besonders bevorzugt 30 bis 100 Gewichtsteilen, jeweils bezogen auf 100 Gewichtsteile Organosiliciumverbindung (A).

Beispiele für Weichmacher und Hitzestabilisatoren, die als Komponente (D) zugegeben werden können, sind die oben dafür angegebenen Beispiele.

Darüberhinaus enthalten die erfindungsgemäßen peroxidisch vernetzbaren Massen vorzugsweise keine weiteren Stoffe.

Bei den jeweiligen zur Herstellung der erfindungsgemäßen peroxidisch vernetzbaren Massen eingesetzten Komponenten kann es sich jeweils um eine einzelne Art einer solchen Komponente, wie auch um ein Gemisch aus mindestens zwei verschiedenen Arten einer solchen Komponente handeln.

Die Herstellung der erfindungsgemäßen peroxidisch vernetzbaren Organopolysiloxanmassen kann nach bekannten Verfahren erfolgen, wie beispielsweise durch einfaches Mischen der einzelnen Komponenten.

Die erfindungsgemäßen peroxidisch vernetzbaren Massen können bei den gleichen Bedingungen vernetzen gelassen werden wie die bisher bekannten peroxidisch vernetzbaren Massen.

Die erfindungsgemäßen Massen sowie die erfindungsgemäß daraus hergestellten Elastomere können für alle Zwecke eingesetzt werden, für die auch bisher zu Elastomeren vernetzbare Organopolysiloxanmassen bzw. Elastomere verwendet wurden. Insbesondere eignen sich die erfindungsgemäßen peroxidisch vernetzbaren Massen sowie die erfindungsgemäß daraus hergestellten Elastomere für Anwendungen, die einen verbesserten Weiterreißwiderstand erfordern, wie z.B. Schläuche, Kabelummantelungen, Kraftfahrzeugteile und Dichtungen.
Die erfindungsgemäßen Massen eignen sich besonders gut zur Herstellung von Folien im Kalandrierverfahren sowie zum Aufbringen auf textile oder nichttextile Flächengebilde mit Hilfe eines Kalanders oder durch Extrusion aus einer Breitschlitzdüse.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25°C beziehen.

Die Weiterreißfestigkeit der Vulkanisate wird nach ASTM D 624 B bestimmt.

Die Shore-A-Härte wird nach DIN (Deutsche Industrie Norm) 53505-87 bestimmt.

Die Reißfestigkeit wird nach DIN 53504-85S1 bestimmt.

Die Bruchdehnung wird nach ASTM D 412 bestimmt.

Der Reibungskoeffizient wird nach ASTM D1894 bestimmt.

Der Heizwert wird nach DIN 51900 bestimmt.

### Glasblättchen aus Borsilikatglas

In den Beispielen werden Glasblättchen aus Borsilikatglas mit einer Teilchengrößenverteilung von < 50 µm (mindestens 88%), 150-50 µm (bis 10%) und > 150 µm (bis 2%) sowie einer Dicke der Glasblättchen von 1,9 bis 2,5 µm eingesetzt. Die Glasblättchen sind nicht oberflächenbehandelt, wobei das Glas die folgende Zusammensetzung hat:

| | |
|---|---|
| SiO₂ | 63 - 70 % |
| Al₂O₃ | 3 - 6 % |
| CaO | 4 - 7 % |
| MgO | 1 - 4 % |
| B₂O₃ | 2 - 5 % |
| Na₂O | 9 - 12 % |
| K₂O | 0 - 3 % |
| TiO₂ | 0 - 4 % |
| ZnO | 1 - 5 % |

mit einer Dichte von 2,60 (H₂O=1), einem Schmelzpunkt von 930 bis 1020°C und einer Erweichungstemperatur von 688°C (DIM 52324). Die eingesetzten Glasblättchen sind käuflich erhältlich unter der Handelsbezeichnung "ECR Glass Flake Micronised, Grade GF 003" bei der Glassflake Ltd., GB-Leeds.

### Vergleichsbeispiel 1

120 g eines vinylendständigen Dimethylpolysiloxans mit einer Viskosität von 20000 mPas und 156 g eines vinylendständigen Dimethylpolysiloxanes mit einer Viskosität von 1000 mPas werden mit 55 g einer hochdispersen Kieselsäure mit einer BET-Oberfläche von 300 g/m² vermischt.

In diese Mischung werden 0,06 g Platin-1,3-Divinyl-1,1,3,3-tetramethyldisiloxan-Komplex (sog. Karstedt-Katalysator), 10 g eines Methylhydrogenpolysiloxanes der Formel (Me₃SiO) (Me₂SiO) _{ca.30} (MeHSiO) _{ca.30} (SiMe₃) mit einem Wasserstoffgehalt von 0,74 % und einer Viskosität von 65 mm²/s und 1,5 g E-thinylcyclohexanol eingearbeitet.

Die so erhaltene Siliconkautschukmasse wird bei 150°C innerhalb 5 Minuten vulkanisiert.

### Beispiel 1

In 100 g der Siliconkautschukmasse, deren Herstellung in Vergleichsbeispiel 1 beschrieben ist, werden 40 g der oben beschriebenen Glasblättchen aus Borsilikatglas an einem Rührer eingemischt.

Diese Masse wird bei 150°C innerhalb von 5 Minuten vulkanisiert.

Aus Vergleichsbeispiel 1 und Beispiel 1 werden Silikonkautschuke mit folgenden Eigenschaften erhalten:

| | Vergleichsbeispiel 1 | Beispiel 1 |
|---|---|---|
| Shore A | 42 | 68 |
| Reißfestigkeit N/mm² | 2,8 | 4,0 |
| Weiterreißfestigkeit N/mm | 3,8 | 8,5 |
| Bruchdehnung % | 210 | 140 |
| Reibungskoeffizient | 1,4 | 0,4 |
| Heizwert kJ/g | 24 | 15 |

### Vergleichsbeispiel 2

164 g eines beidseitig Si-OH endständigen Dimethylpolysiloxanes mit einer Viskosität von 80000 mPas und 96 g hydrophobierte, hochdisperse Kieselsäure mit einer BET-Oberfläche von 130 g/m² werden in einem Kneter vermischt. In die homogene Mischung werden 103 g beidseitig Si-OH endständiges Dimethylpolysiloxan mit einer Viskosität von 1000 mPas eingearbeitet. Dann werden 1,5 g n-Propanol, 18,4 g Methyltriacetoxysilan und 0,26 g Dibutylzinndiacetat zugegeben.

Die so erhaltene Siliconkautschukmasse wird bei 25°C und 50 % rel. Luftfeuchtigkeit für eine Dauer von 48 Stunden vulkanisiert.

### Beispiel 2

In 100 g der Siliconkautschukmasse, deren Herstellung in Vergleichsbeispiel 2 beschrieben ist, werden 10 g der oben beschriebenen Glasblättchen aus Borsilikatglas an einem Rührer eingemischt.

Diese Siliconkautschukmasse wird bei 25°C und 50 % rel. Luftfeuchtigkeit für eine Dauer von 48 Stunden vulkanisiert.

Aus Vergleichsbeispiel 2 und Beispiel 2 werden Siliconkautschuke mit folgenden Eigenschaften erhalten:

| | Vergleichsbeispiel 2 | Beispiel 2 |
|---|---|---|
| Shore A | 24 | 31 |
| Reißfestigkeit N/mm² | 2,0 | 2,7 |
| Weiterreißfestigkeit N/mm | 3,8 | 4,2 |
| Bruchdehnung % | 280 | 150 |

### Vergleichsbeispiel 3

728 g eines beidseitig vinylendständigen Dimethylpolysiloxans mit einer Brabenderplastizität von 5,2 Nm werden in einem Kneter mit 10,9 g eines beidseitig Si-OH endständigen Dimethylpolysiloxans mit einer Viskosität von 65 mPas und mit 4,3 g eines Polysiloxanes der Formel HO [SiO (CH₃) CH=CH₂] ₁₀ [ SiO (CH₃) ₂] ₄₀OH vermischt. In diese Mischung werden 265 g einer hochdispersen Kieselsäure mit einer BET-Oberfläche von 150 g/m² eingearbeitet. Gegen Ende der Mischarbeit werden 8 g Dibenzoylperoxid eingemischt.

Die so erhaltene Siliconkautschukmasse wird in einer Pressform bei 165°C für eine Dauer von 5 Minuten vulkanisiert.

### Beispiel 3

In 100 g der Siliconkautschukmasse, deren Herstellung in ergleichsbeispiel 3 beschrieben ist, werden 10 g der oben beschriebenen Glasblättchen aus Borsilikatglas an einem Kneter eingemischt..

Diese Siliconkautschukmasse wird in einer Pressform bei 165°C für eine Dauer von 5 Minuten vulkanisiert.

Aus Vergleichsbeispiel 3 und Beispiel 3 werden Siliconkautschuke mit folgenden Eigenschaften erhalten:

| | Vergleichsbeispiel 3 | Beispiel 3 |
|---|---|---|
| Shore A | 41 | 49 |
| Reißfestigkeit N/mm² | 7,5 | 9,7 |
| Weiterreißfestigkeit N/mm | 19 | 20 |
| Bruchdehnung % % | 750 | 740 |

## Patentansprüche

1. Vernetzbare Massen auf der Basis von Organosiliciumverbindungen, **dadurch gekennzeichnet, dass** sie Glasblättchen mit einer Dicke von 0,1 bis 20 µm, einer Länge von 1 bis 5000 µm und einer Breite von 1 bis 5000 µm enthalten.

2. Massen gemäß Anspruch 1, **dadurch gekennzeichnet, dass** die Glasblättchen ein Verhältnis von Breite bzw. Länge zu Dicke im Bereich von 10 : 1 bis 2000 : 1 aufweisen.

3. Massen gemäß Anspruch 1 oder 2, **dadurch gekennzeichnet, dass** es sich um unter Ausschluss von Wasser lagerfähige, bei Zutritt von Wasser bei Raumtemperatur durch Kondensation zu Elastomeren vernetzbare Massen handelt.

4. Massen gemäß Anspruch 3, **dadurch gekennzeichnet, dass** es sich bei den durch Kondensation vernetzbaren Massen um solche handelt, die
(a) kondensationsfähige Gruppen aufweisende Organosiliciumverbindung,
(b) Organosiliciumverbindung mit mindestens drei Si-gebundenen hydrolysierbaren Resten,
(c) Kondensationskatalysator,
(d) Glasblättchen mit einer Dicke von 0,1.bis 20 µm, einer Länge von 1 bis 5000 µm und einer Breite von 1 bis 5000 µm und gegebenenfalls
(e) weitere Stoffe enthalten.

5. Massen gemäß Anspruch 1 oder 2, **dadurch gekennzeichnet, dass** es sich um Massen auf der Basis von Organosiliciumverbindungen handelt, die durch Anlagerung von Si-gebundenem Wasserstoff an aliphatische Kohlenstoff-Kohlenstoff-Mehrfachbindung vernetzbar sind.

6. Massen gemäß Anspruch 5, **dadurch gekennzeichnet, dass** es sich bei den durch Additionreaktion vernetzbaren Massen um solche handelt, die
(1) Organosiliciumverbindungen, die SiC-gebundene Reste mit aliphatischen Kohlenstoff-Kohlenstoff-Mehrfachbindungen aufweisen,
(2) Organosiliciumverbindungen mit Si-gebundenen Wasserstoffatomen oder anstelle von (1) und (2)
(3) Organosiliciumverbindungen, die SiC-gebundene Reste mit aliphatischen Kohlenstoff-Kohlenstoff-Mehrfachbindungen und Si-gebundene Wasserstoffatome aufweisen,
(4) die Anlagerung von Si-gebundenem Wasserstoff an aliphatische Mehrfachbindung fördernden Katalysator,
(5) Glasblättchen mit einer Dicke von 0,1 bis 20 µm, einer Länge von 1 bis 5000 µm und einer Breite von 1 bis 5000 µm und gegebenenfalls
(6) weitere Stoffe enthalten.

7. Massen gemäß Anspruch 1 oder 2, **dadurch gekennzeichnet, dass** es sich um peroxidisch vernetzbare Massen auf der Basis von Organosiliciumverbindungen handelt.

8. Massen gemäß Anspruch 7, **dadurch gekennzeichnet, dass** es sich bei den peroxidisch vernetzbaren Massen um solche handelt, die
(A) Organosiliciumverbindungen aus Einheiten der allgemeinen Formel
R⁵ᵣSiO_{(4-r) /2} (V),
worin
R⁵ gleich oder verschieden sein kann und einwertiger, gegebenenfalls substituierter Kohlenwasserstoffrest, Hydroxy- oder Alkoxyrest bedeutet und
r 0, 1, 2 oder 3 ist und einen durchschnittlichen Zahlenwert von 1,9 bis 2,1 hat,
(B) die Vernetzung über freie Radikale bewirkendes Agens,
(C) Glasblättchen mit einer Dicke von 0,1 bis 20 µm, einer Länge von 1 bis 5000 µm und einer Breite von 1 bis 5000 µm
und gegebenenfalls
(D) weitere Stoffe enthalten.

9. Formkörper, hergestellt durch Vernetzung der Massen gemäß einem oder mehreren der Ansprüche 1 bis 8.

10. Mit den Massen gemäß einem oder mehreren der Ansprüche 1 bis 8 beschichtete textile oder nichttextile Flächengebilde.
